# EUROPEAN PATENT SPECIFICATION

(11) **EP 4 287 564 B1**
(45) Date of publication and mention of the grant of the patent: **08.04.2026**
(21) Application number: 22275072.1
(22) Date of filing: 02.06.2022
(51) Int. Cl.: H04L 12/40, H04L 25/02

(54) **CAN INTERFACE TERMINATION CONTROL**
CAN-SCHNITTSTELLEN-TERMINIERUNGSSTEUERUNG
COMMANDE DE TERMINAISON D'INTERFACE CAN

(43) Date of publication of application: 06.12.2023
(73) Proprietor: Hamilton Sundstrand Corporation, Charlotte, NC 28217 (US)
(72) Inventor: SEHRA, Kashav, Birmingham, B32 1EP (GB); MCLEAN, Andrew, Halesowen, B62 8TR (GB)
(74) Representative: Dehns

(56) References cited:
- EP-A1- 3 214 803
- US-A1- 2015 346 259
- US-A1- 2019 018 817

## Description

### TECHNICAL FIELD

The present disclosure is concerned with controlling termination resistance in a CAN interface.

### BACKGROUND

A controller area network (CAN) is an electronic bus designed to connect various devices, e.g. ECUs, (also known as nodes) together and to send messages containing information such as sensor parameters, commands etc. between the nodes. Typical devices that are connected to a CAN bus are sensors, actuators and other control devices. The CAN bus consists of two wires and allows all connected devices/nodes to communicate with and via the bus. CAN buses are used, e.g. in automotives and in aerospace to connect and allow communication between various ECUs or devices in the vehicle/aircraft. The CAN is particularly suitable in high electrical noise environments as it is designed to work with high noise immunity. The bus has two ends connected to nodes or interfaces but is also connected to other so-called stub devices or nodes between the ends of the bus. The bus is, as mentioned above, formed of a wire pair and generally has a 120 Ohm characteristic impedance. Termination resistors, usually 120 Ohms, are provided at the nodes at the ends of the bus, to suppress reflections back along the bus, but the stub devices do not need such resistors. For improved EMI emission levels, the CAN termination resistor can be split into two series resistors (typically each 60 Ohms) with the mid-point between the resistors connected via a capacitor to ground (or the vehicle chassis). This provides a capacitive coupling path for any high frequency noise on the bus. When providing nodes to be attached to the bus, it is often not known whether the node will be provided at the end of the bus or as a stub device between the bus ends and, therefore, not known whether the node is one that will require a termination resistor. CANs are known from US 2019/018817 A1 and US 2015/346259 A1.

To simplify the design process, it has been considered by the inventors to be desirable to be able to control termination resistance for a node according to its intended location on the bus.

### SUMMARY

According to the disclosure there is provided a controller area network, CAN, device as defined by claim 1.

Also provided is a controller area network with a plurality of such devices, as well as a method of adjusting the termination resistance of a CAN device according to claims 6 and 8 respectively.

### BRIEF DESCRIPTION

Examples of the termination control according to the disclosure will now be described. It should be noted that variations are possible within the scope of the claims.
Figure 1 is a simple circuit diagram showing standard CAN termination of an isolated CAN transceiver.
Figure 2 shows an example of split CAN termination
Figure 3 is a simple circuit diagram showing control of the CAN termination according to an example of the disclosure.

### DETAILED DESCRIPTION

As mentioned above, a CAN bus is a two wire bus to which several devices or nodes are connected for communication on and via the bus. The nodes connected to the bus transmit and receive information sent as binary information using a frame according to a selected CAN communication protocol as is known in the art and this will not be described further here.

Each node is provided with a central processor unit, usually a microprocessor (here abbreviated to MCU), a CAN controller for controlling reception and transmission of data from and to the bus, and a CAN transceiver.

For those nodes to be provided to the ends of the bus, it is necessary to provide the node with a termination resistor. Nodes connected to the CAN bus between its ends do not have a termination resistor.

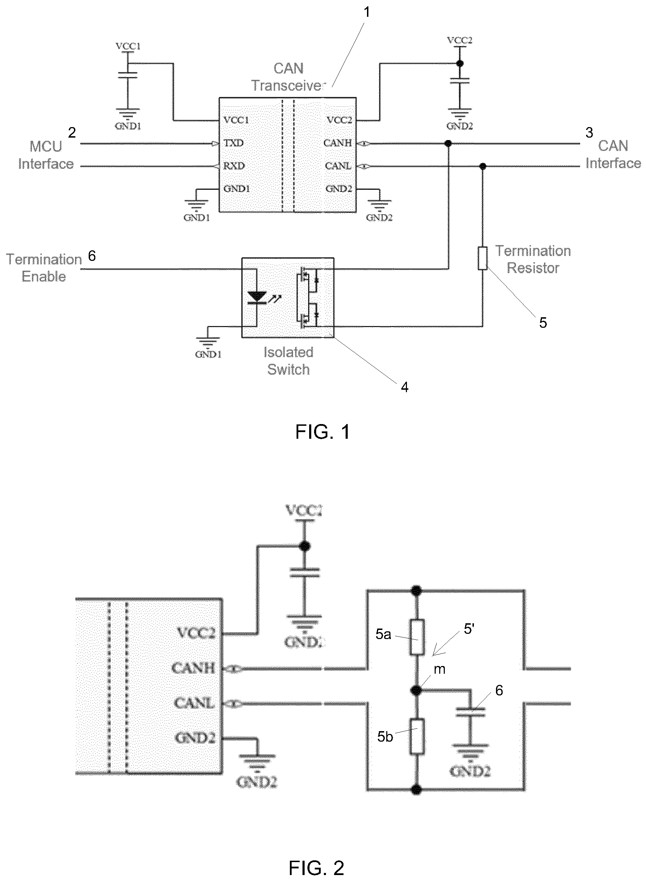

Figure 1 shows the standard method of CAN termination of an isolated CAN transceiver 1 connected to the MCU of the node at the MCU interface 2 and to the CAN bus at the CAN interface 3. The transceiver drives data to and detects data from the CAN bus. The node is also provided with a switchable solid state relay 4 that allows a termination resistor 5 to be switched in (for an end node) or not (for a stub node). If the termination resistor 5 is to be activated or enabled for a given node, a termination enable signal 6 is provided to the isolated switch 4. The switch closes to connect the termination resistor 5 across the CAN interface 3 thus providing termination resistance for that node. This works well for a single termination resistor, using e.g. a MOSFET that switches the resistor in or out.

In the case of the termination resistor being a split resistor, as shown in Fig. 2, the switching in or out is, however, not so simple. The termination resistor 5' is split into two resistors 5a, 5b connected across the high and low bus lines between the CAN interface and the transceiver. The mid-point M between the two split resistors 5a, 5b is connected to ground via a capacitor 6. The filter capacitor 6 value is preferably selected to create a 3dB point above the CAN bus bitrate.

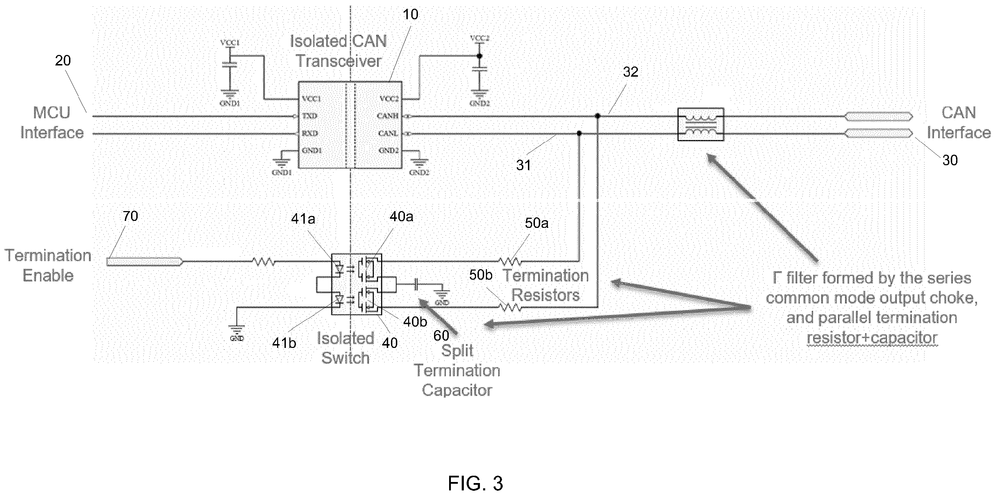

The present disclosure provides a method of software control for switching in a split CAN termination so that any one node can be easily and quickly configured to be an end node or a stub node without a change in hardware and typically requiring only software or firmware changes. An example of this is described with reference to Fig. 3 which shows a CAN transceiver 10 connected, as in the example described above, between an MCU interface 20 and a CAN interface 30.

An isolated switch 40 with solid state circuitry is provided for the node to control the enabling of two split termination resistors 50a, 50b for respective connection to the high and low bus wires 31, 32. The switch 40 comprises two solid state devices 40a, 40b forming a dual opto-coupled solid state relay (SSR). A dual opto-coupled SSR is advantageous in that it provides isolation, but other types of isolation could be used. The first solid state device 40a is connected between a first side of the first split resistor 50a and ground, via a capacitor 60. The second solid state device 40b is connected with a first side of the second split resistor 50b and ground via the capacitor 60.

The opto-coupler LEDs 41a, 41b are connected in series between a termination enable line 70 (here, e.g. via an impedance) and ground. The first LED 41a activates the first solid state device to enable the first resistor and the second LED 41b activates the second solid state device to enable the second resistor. The other sides of the resistors are connected, respectively, to the high and low lines 31, 32.

The series common mode output choke and the parallel termination resistors 50a, 50b and the capacitor 60 together also form a noise filter 80.

The isolated switch 60 will now be described in more detail.

The termination resistors 50a, 50b values are selected to take into account the on-resistance of the solid state relay 40a, 40b. The enable signal provided to the switch can be either high side control or low side control depending on the MCU sink/source current capability. The opto-coupler LEDs 41a, 41b to activate the SSR 40a, 40b are series connected and can be controlled directly from the MCU.

By having a software controlled switching in and out of the split termination resistor, a single part can be used for the transceiver regardless of whether the node will be an end node or a stub node. In a network with many nodes, there may be a need to remove one node that was, for example, previously an end node, which means that a different node, that was previously a stub node with no termination resistor, can easily be configured with a termination resistor when it becomes a new end node. Similarly, if a new node is added, a previous end node may then become a stub node and the termination resistor can be disabled. The enabling/disabling of termination can be automated by the software in the CAN devices, so that a negotiation is carried out to detect all CAN devices, and if any new devices are detected or previous devices are missing, the required termination settings are automatically applied.

The control mechanism provides an electrically isolated way of controlling CAN termination with a split termination capacitor. The termination according to the disclosure can be controlled directly by the node MCU which means that the node can be easily and quickly adapted to be an end node or a stub node. These advantages are provided using a small number of inexpensive components and the circuitry has a small pcb footprint.

## Claims

1. A controller area network, CAN, device arranged to communicate on a CAN bus, the device comprising a processor, a CAN controller, a CAN transceiver (10) and a termination resistor and switch assembly, the termination resistor and switch assembly comprising a switch (40) and a first termination resistor (50a) and a second termination resistor (50b) for connection, respectively, between the device and a first line (31) and a second line (32) of the CAN bus, the switch comprising a dual opto-coupled solid-state relay, between the first termination resistor and the second termination resistor, and a split termination capacitor (60) connected at a mid-point between the first termination resistor and the second termination resistor and ground, whereby the switch is controlled by a termination enable signal from the device processor to switch in or switch out the first and second termination resistors according to a position of the device on the CAN bus; wherein the dual opto-coupled solid-state relay comprises a first opto-coupler LED (41a) and a first solid state device (4oa) arranged to be enabled by the first opto-coupler LED and a second opto-coupler LED (41b) and a second solid state device (40b) arranged to be enabled by the second opto-coupler LED, first and second solid-state devices connected in series and the split termination capacitor connected from the mid-point between the first and second solid-state devices and ground; and
wherein the first and second opto-coupler LEDs are connected in series between a termination enable line (70) connected to the processor, and ground.

2. The CAN device of claim 1, wherein the first solid-state device (40a) is connected between a first side of the first split resistor (50a) and ground, and the second solid-state device (40b) is connected with a first side of the second split resistor (50b) and ground via the split termination capacitor (60).

3. The CAN device of any preceding claim, wherein the first and second termination resistors and the slit termination capacitor combine to form a noise filter.

4. The CAN device of any preceding claim, wherein the termination enable signal is controlled by software stored in the processor.

5. The CAN device of any preceding claim, wherein the software stored in the processor is configured to control the termination enable signal based on a detection of all devices connected to the CAN.

6. A control area network, CAN, comprising a CAN bus and a plurality of CAN devices as claimed in any preceding claim for connection to and communication with and over the CAN bus, wherein the enable signal is controlled for each device according to its intended location of the bus.

7. The CAN of claim 6, wherein the processor is a microprocessor and the transceiver being connected to the microprocessor via an interface.

8. A method of controlling the termination resistance of a CAN device according to any of claims 1 to 5, for connection to a bus of a CAN, the method comprising generating an enable signal to switch on or off a split termination resistor for the device depending on the position of the device on the CAN bus.

9. The method of claim 8, further comprising detecting the position of other devices on the CAN bus and controlling the enable signal for each device depending on the detected positions of other devices on the bus.

10. The method of claim 8 or 9, further comprising adjusting the termination resistance for a device in response to the device changing between a position at an end of the bus and a position intermediate the ends of the bus.

## Patentansprüche

1. Controller Area Network (CAN)-Vorrichtung, die so angeordnet ist, dass sie auf einem CAN-Bus kommuniziert, wobei die Vorrichtung einen Prozessor, eine CAN-Steuerung, einen CAN-Transceiver (10) und eine Terminierungswiderstands- und Schalterbaugruppe umfasst, wobei die Terminierungswiderstands- und Schalterbaugruppe einen Schalter (40) und einen ersten Terminierungswiderstand (50a) und einen zweiten Terminierungswiderstand (50b) zur Verbindung zwischen der Vorrichtung und einer ersten Leitung (31) bzw. einer zweiten Leitung (32) des CAN-Busses umfasst, wobei der Schalter ein duales optogekoppeltes Halbleiterrelais zwischen dem ersten Terminierungswiderstand und dem zweiten Terminierungswiderstand und einen geteilten Terminierungskondensator (60) umfasst, der an einem Mittelpunkt zwischen dem ersten Terminierungswiderstand und dem zweiten Terminierungswiderstand und Masse verbunden ist, wodurch der Schalter durch ein Terminierungsfreigabesignal vom Vorrichtungsprozessor gesteuert wird, um den ersten und den zweiten Terminierungswiderstand gemäß einer Position der Vorrichtung auf dem CAN-Bus ein- oder auszuschalten; wobei das duale optogekoppelte Halbleiterrelais eine erste Optokoppler-LED (41a) und eine erste Halbleitervorrichtung (40a) umfasst, die so angeordnet ist, dass sie durch die erste Optokoppler-LED aktiviert wird, und eine zweite Optokoppler-LED (41b) und eine zweite Halbleitervorrichtung (40b) umfasst, die so angeordnet ist, dass sie durch die zweite Optokoppler-LED aktiviert wird, wobei die erste und die zweite Halbleitervorrichtung in Reihe geschaltet sind und der geteilte Terminierungskondensator vom Mittelpunkt zwischen der ersten und der zweiten Halbleitervorrichtung und Masse verbunden ist; und
wobei die erste und die zweite Optokoppler-LED in Reihe zwischen einer mit dem Prozessor verbundenen Terminierungsfreigabeleitung (70) und Masse geschaltet sind.

2. CAN-Vorrichtung nach Anspruch 1, wobei die erste Halbleitervorrichtung (40a) zwischen einer ersten Seite des ersten geteilten Widerstands (50a) und Masse verbunden ist und die zweite Halbleitervorrichtung (40b) über den geteilten Terminierungskondensator (60) mit einer ersten Seite des zweiten geteilten Widerstands (50b) und Masse verbunden ist.

3. CAN-Vorrichtung nach einem der vorhergehenden Ansprüche, wobei der erste und der zweite Terminierungswiderstand und der geteilte Terminierungskondensator zusammen einen Rauschfilter bilden.

4. CAN-Vorrichtung nach einem der vorhergehenden Ansprüche, wobei das Terminierungsfreigabesignal durch eine im Prozessor gespeicherte Software gesteuert wird.

5. CAN-Vorrichtung nach einem der vorhergehenden Ansprüche, wobei die im Prozessor gespeicherte Software dazu konfiguriert ist, das Terminierungsfreigabesignal auf der Grundlage einer Erkennung aller mit dem CAN verbundenen Vorrichtungen zu steuern.

6. Control Area Network (CAN), umfassend einen CAN-Bus und eine Vielzahl von CAN-Vorrichtungen nach einem der vorhergehenden Ansprüche zur Verbindung und Kommunikation mit dem CAN-Bus und über den CAN-Bus, wobei das Freigabesignal für jede Vorrichtung gemäß ihrer beabsichtigten Position auf dem Bus gesteuert wird.

7. CAN nach Anspruch 6, wobei der Prozessor ein Mikroprozessor ist und der Transceiver über eine Schnittstelle mit dem Mikroprozessor verbunden ist.

8. Verfahren zum Steuern des Terminierungswiderstands einer CAN-Vorrichtung nach einem der Ansprüche 1 bis 5 zur Verbindung mit einem CAN-Bus, wobei das Verfahren Erzeugen eines Freigabesignals zum Ein- oder Ausschalten eines geteilten Terminierungswiderstands für die Vorrichtung in Abhängigkeit von der Position der Vorrichtung auf dem CAN-Bus umfasst.

9. Verfahren nach Anspruch 8, ferner umfassend Erfassen der Position anderer Vorrichtungen auf dem CAN-Bus und Steuern des Freigabesignals für jede Vorrichtung in Abhängigkeit von den erfassten Positionen anderer Vorrichtungen auf dem Bus.

10. Verfahren nach Anspruch 8 oder 9, ferner umfassend Einstellen des Terminierungswiderstands für eine Vorrichtung als Reaktion darauf, dass die Vorrichtung zwischen einer Position an einem Ende des Busses und einer Position zwischen den Enden des Busses wechselt.

## Revendications

1. Dispositif de réseau local de commande CAN, agencé pour communiquer sur un bus CAN, le dispositif comprenant un processeur, un dispositif de commande CAN, un émetteur-récepteur CAN (10) et un ensemble de résistances de terminaison et de commutateurs, l'ensemble de résistances de terminaison et de commutateurs comprenant un commutateur (40) et une première résistance de terminaison (50a) et une seconde résistance de terminaison (50b) pour la connexion, respectivement, entre le dispositif et une première ligne (31) et une seconde ligne (32) du bus CAN, le commutateur comprenant un relais à semi-conducteur opto-couplé double, entre la première résistance de terminaison et la seconde résistance de terminaison, et un condensateur de terminaison divisé (60) connecté au niveau d'un point médian entre la première résistance de terminaison et la seconde résistance de terminaison et la masse, moyennant quoi le commutateur est commandé par un signal d'activation de terminaison provenant du processeur de dispositif pour activer ou désactiver les première et seconde résistances de terminaison selon une position du dispositif sur le bus CAN ; dans lequel le relais à semi-conducteur opto-couplé double comprend une première DEL d'opto-coupleur (41a) et un premier dispositif à semi-conducteur (4oa) agencé pour être activé par la première DEL d'opto-coupleur, ainsi qu'une seconde DEL d'opto-coupleur (41b) et un second dispositif à semi-conducteur (40b) agencé pour être activé par la seconde DEL d'opto-coupleur, les premier et second dispositifs à semi-conducteur étant connectés en série et le condensateur de terminaison divisé étant connecté à partir du point médian entre les premier et second dispositifs à semi-conducteur et la masse ; et
dans lequel les première et seconde DEL d'opto-coupleur sont connectées en série entre une ligne d'activation de terminaison (70) connectée au processeur et la masse.

2. Dispositif CAN selon la revendication 1, dans lequel le premier dispositif à semi-conducteur (40a) est connecté entre un premier côté de la première résistance divisée (50a) et la masse, et le second dispositif à semi-conducteur (40b) est connecté avec un premier côté de la seconde résistance divisée (50b) et la masse par l'intermédiaire du condensateur de terminaison divisé (60).

3. Dispositif CAN selon une quelconque revendication précédente, dans lequel les première et seconde résistances de terminaison et le condensateur de terminaison divisé se combinent pour former un filtre anti-bruit.

4. Dispositif CAN selon une quelconque revendication précédente, dans lequel le signal d'activation de terminaison est commandé par un logiciel stocké dans le processeur.

5. Dispositif CAN selon une quelconque revendication précédente, dans lequel le logiciel stocké dans le processeur est configuré pour commander le signal d'activation de terminaison en fonction d'une détection de tous les dispositifs connectés au CAN.

6. Réseau local de commande, CAN, comprenant un bus CAN et une pluralité de dispositifs CAN selon une quelconque revendication précédente pour la connexion et la communication avec et sur le bus CAN, dans lequel le signal d'activation est commandé pour chaque dispositif selon son emplacement prévu sur le bus.

7. CAN selon la revendication 6, dans lequel le processeur est un microprocesseur et l'émetteur-récepteur étant connecté au microprocesseur par l'intermédiaire d'une interface.

8. Procédé de commande de la résistance de terminaison d'un dispositif CAN selon l'une quelconque des revendications 1 à 5, pour la connexion à un bus d'un CAN, le procédé comprenant la génération d'un signal d'activation pour activer ou désactiver une résistance de terminaison divisée pour le dispositif en fonction de la position du dispositif sur le bus CAN.

9. Procédé selon la revendication 8, comprenant également la détection de la position d'autres dispositifs sur le bus CAN et la commande du signal d'activation pour chaque dispositif en fonction des positions détectées des autres dispositifs sur le bus.

10. Procédé selon la revendication 8 ou 9, comprenant également l'ajustement de la résistance de terminaison d'un dispositif en réponse au changement de position du dispositif entre une position au niveau d'une extrémité du bus et une position intermédiaire entre les extrémités du bus.
